# EUROPEAN PATENT APPLICATION

(11) **EP 4 819 313 A1**
(43) Date of publication of application: **07.10.2026**
(21) Application number: 25869604.6
(22) Date of filing: 04.06.2025
(51) Int. Cl.: H01M 50/107

(54) **BATTERY AND ELECTRIC DEVICE**

(30) Priority: 20.02.2025 CN 202520282070 U
(71) Applicant: HUIZHOU EVE POWER CO., LTD, Huizhou, Guangdong 516039 (CN)
(72) Inventor: CHEN, Pandong, Huizhou, Guangdong 516039 (CN); YAN, Bo, Huizhou, Guangdong 516039 (CN); XU, Yuebin, Huizhou, Guangdong 516039 (CN)
(74) Representative: Zhu, Puxing
(86) International application number: PCT/CN2025/099166
(87) International publication number: WO 2026/174688

(57) **Abstract**

The present disclosure provides a battery and an electrical device. The battery includes a casing, a winding core, and a connecting member. The casing is formed with a mounting cavity and an inward retracted portion. The inward retracted portion is protruded toward an interior of the mounting cavity. The winding core is disposed in the mounting cavity. The winding core is located between the inward retracted portion and an inner bottom wall of the casing. A part of the connecting member is disposed between the inward retracted portion and the winding core. The connecting member is abutted against a side of the winding core away from the inner bottom wall of the casing. Along a radial direction of the casing, a connecting surface between the connecting member and the winding core is at least partially protruded over the inward retracted portion.

## Description

This application claims priority to and the benefit of Chinese Patent Application No. 202520282070.4, filed on February 20, 2025. The disclosure of which is incorporated herein by reference in its entirety.

### TECHNICAL FIELD

The present disclosure relates to the field of battery technologies, and in particular, to a battery and an electrical device.

### BACKGROUND

Batteries are widely used in fields such as energy storage systems, vehicles, and consumer electronics. The battery mainly includes structures such as a casing, a cover plate, and a winding core.

### SUMMARY

For the batteries in the related art, the casing is mostly formed with a rolling groove protruding toward an internal space of the casing through a rolling groove process. In order to ensure that the rolling groove may limit a position of the winding core, a length of the rolling groove protruding from the internal space of the casing is relatively long, resulting in a relatively large degree of stretching subjected to the casing, so that a coating layer on a surface of the casing is relatively thin, thereby affecting the performance of the batteries.

In a first aspect, the present disclosure provides a battery, including:
a casing formed with a mounting cavity and an inward retracted portion, where the inward retracted portion is protruded toward an interior of the mounting cavity;
a winding core disposed in the mounting cavity, where the winding core is located between the inward retracted portion and an inner bottom wall of the casing; and
a connecting member, where a part of the connecting member is disposed between the inward retracted portion and the winding core, and the connecting member is abutted against a side of the winding core away from the inner bottom wall of the casing.

Along a radial direction of the casing, a connecting surface between the connecting member and the winding core is at least partially protruded over the inward retracted portion.

In a second aspect, the present disclosure provides an electrical device, including the above-described battery.

### BENEFICIAL EFFECTS

In the battery provided by the present disclosure, a part of the connecting member is disposed between the inward retracted portion and the winding core to limit a position of the connecting member, thereby improving the mounting stability of the connecting member. The connecting member is abutted against the winding core, so that the connecting member may play a role in limiting the position of the winding core. In other words, in the present disclosure, the connecting member is limited between the inward retracted portion and the winding core, and the connecting member is abutted against the winding core, so that the connecting member may play a role in limiting a position of the winding core. Moreover, the connecting surface between the connecting member and the winding core may be protruded over the inward retracted portion, so that the connecting member may play an effective role in limiting the position of the winding core. In this way, the inward retracted portion does not directly play a role in limiting the position of the winding core, so that a depth of the inward retracted portion protruding relative to the interior of the mounting cavity is shortened, a degree of stretching subjected to the casing is reduced, thereby ensuring a thickness of a coating layer on a surface of the casing, and improving the performance of the battery.

### BRIEF DESCRIPTION OF THE DRAWINGS

FIG. 1 is a schematic view of a structure of a battery according to the embodiments of the present disclosure.
FIG. 2 is a cross-sectional view of a battery according to the embodiments of the present disclosure.
FIG. 3 is a schematic enlarged view of a partial structure in FIG. 2 according to the embodiments of the present disclosure.
FIG. 4 is a schematic view of a structure of a connecting member according to the embodiments of the present disclosure.
FIG. 5 is a schematic view of a partial structure of a connecting member according to the embodiments of the present disclosure.

### DETAILED DESCRIPTION

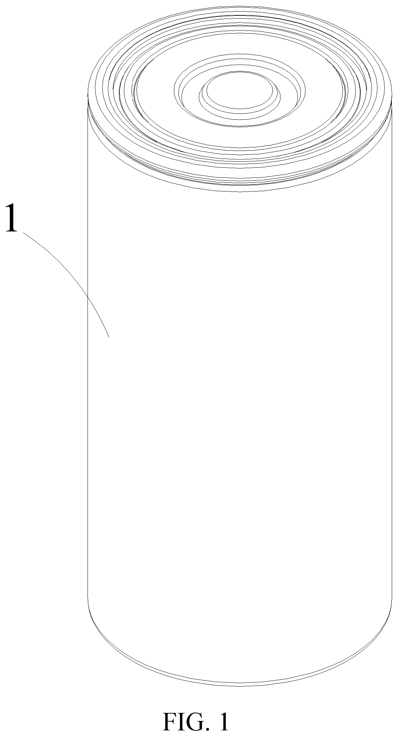

Embodiments of the present disclosure provide a battery. As shown in FIG. 1, FIG. 2, and FIG. 3, the battery includes a casing 1, a winding core 2, and a connecting member 3. The casing 1 is formed with a mounting cavity 11 and an inward retracted portion 12. The inward retracted portion 12 is protruded toward an interior of the mounting cavity 11. The winding core 2 is disposed in the mounting cavity 11. The winding core 2 is located between the inward retracted portion 12 and an inner bottom wall of the casing 1. A part of the connecting member 3 is disposed between the inward retracted portion 12 and the winding core 2. The connecting member 3 is abutted against a side of the winding core 2 away from the inner bottom wall of the casing. Along a radial direction of the casing 1, a connecting surface between the connecting member 3 and the winding core 2 is at least partially protruded over the inward retracted portion 12.

According to the battery provided by the embodiments of the present disclosure, a part of the connecting member 3 is disposed between the inward retracted portion 12 and the winding core 2 to limit a position of the connecting member 3, thereby improving the mounting stability of the connecting member 3. The connecting member 3 is abutted against the winding core 2, so that the connecting member 3 may play a role in limiting a position of the winding core 2. In other words, in the present disclosure, the connecting member 3 is limited between the inward retracted portion 12 and the winding core 2, and the connecting member 3 is abutted against the winding core 2, so that the connecting member 3 may play a role in limiting the position of the winding core 2. Moreover, the connecting surface between the connecting member 3 and the winding core 2 may be protruded over the inward retracted portion 12, so that the connecting member 3 may play an effective role in limiting the position of the winding core 2. In this way, the inward retracted portion 12 does not directly play a role in limiting the position of the winding core 2, so that a depth of the inward retracted portion 12 protruding relative to the interior of the mounting cavity 11 is shortened, a degree of stretching subjected to the casing 1 is reduced, thereby ensuring a thickness of a coating layer on a surface of the casing 1, and improving the performance of the battery.

It may be understood that the connecting member 3 may be a structural member having a sealing function. That is, the battery may be connected to the casing 1 and the cover plate 4 of the battery in a sealed manner by using the connecting member 3. The battery may also be additionally provided with a separate sealing member to be connected to the casing 1 and the cover plate 4 of the battery in a sealed manner.

It may be understood that in the related art, in order to prevent the problem that the coating layer of the casing 1 is too thin due to an excessive depth of the inward retracted portion 12, generally, only an inward retracted depth of the inward retracted portion 12 is simply shortened. However, after the inward retracted depth of the inward retracted portion 12 is shortened, the limit amount of the inward retracted portion 12 to the position of the winding core 2 is insufficient, which easily leads to unstable mounting of the winding core 2. In the present disclosure, the connecting member 3 is used to limit the position of the winding core 2 while shortening a radial depth of the inward retracted portion 12. The connecting surface between the connecting member 3 and the winding core 2 may be protruded over the inward retracted portion 12, i.e., the limit amount of the connecting member 3 to the winding core 2 may be increased without causing an excessive stretching amount of the casing 1. Moreover, a part of the connecting member 3 is disposed between the inward retracted portion 12 and the winding core 2 to limit the position of the connecting member 3 and ensure the stability of the connecting member 3, so that the connecting member 3 may stably play a role in limiting the position of the winding core 2.

In some embodiments, as shown in FIG. 1, FIG. 2, and FIG. 3, the connecting member 3 extends along the side of the winding core 2 away from the inner bottom wall of the casing 1.

It may be understood that the connecting member 3 is abutted against the winding core 2, and the connecting member 3 extends along the surface of the winding core 2, so that a contact area between the connecting member 3 and the winding core 2 may be increased. That is, the limiting amount of the connecting member 3 to the position of the winding core 2 may be increased, thereby ensuring the mounting stability of the winding core 2.

In some examples, the connecting member 3 extends to a center of the mounting cavity 11 along the side of the winding core 2 away from the inner bottom wall of the casing 1, so as to increase a limiting effect of the connecting member 3 to the position of the winding core 2.

In some examples, the connecting member 3 extends toward the casing 1 along the side of the winding core 2 away from the inner bottom wall of the casing 1, so as to increase the limiting effect of the connecting member 3 to the position of the winding core 2.

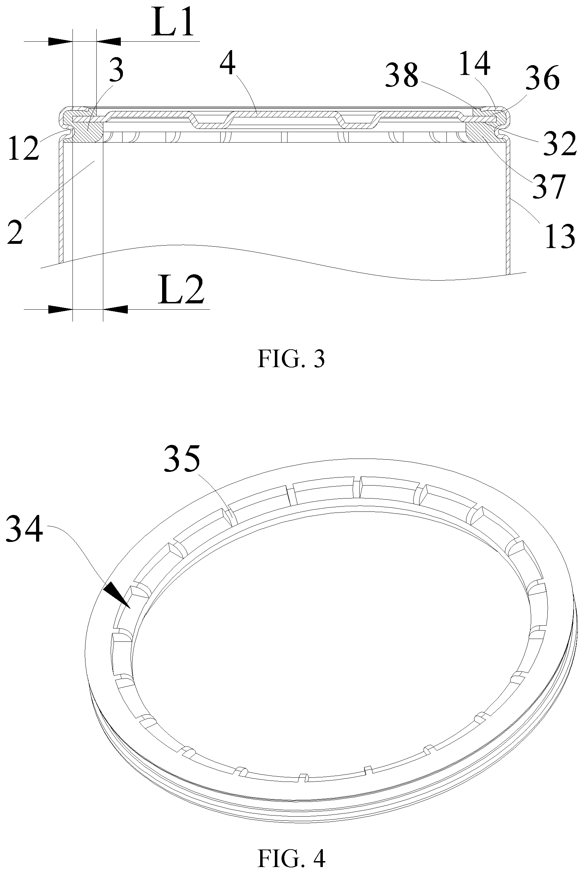

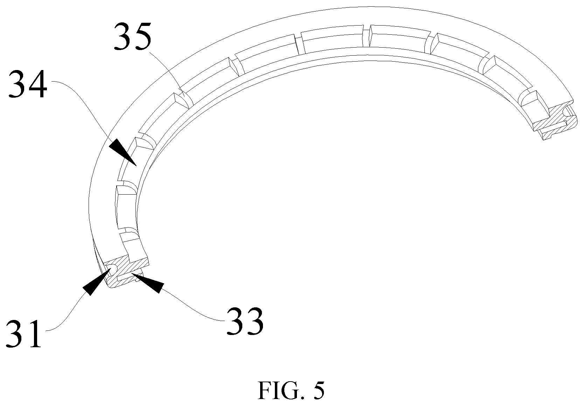

In some embodiments, as shown in FIG. 3 and FIG. 5, a side of the connecting member 3 facing the inward retracted portion 12 is formed with a second clamping groove 31, and the inward retracted portion 12 is clamped in the second clamping groove 31.

It may be understood that the connecting member 3 is formed with the second clamping groove 31, so that the inward retracted portion 12 and the connecting member 3 may be connected by clamping to improve the connection stability between the connecting member 3 and the inward retracted portion 12, and the inward retracted portion 12 may play a stable role in limiting the position of the connecting member 3, thereby improving the mounting stability of the connecting member 3.

In some embodiments, as shown in FIG. 3 and FIG. 5, the inward retracted portion 12 fits a groove wall of the second clamping groove 31.

It may be understood that the inward retracted portion 12 and the connecting member 3 are attached to each other to improve the connection tightness between the connecting member 3 and the inward retracted portion 12, so that the inward retracted portion 12 may play an effective role in limiting the position of the connecting member 3, and waste of the inward retracted depth of the inward retracted portion 12 is effectively reduced, which is conducive to shortening the inward retracted depth of the inward retracted portion 12.

It may be understood that when the inward retracted portion 12 is not attached to the groove wall of the second clamping groove 31, a gap is provided between the inward retracted portion 12 and the connecting member 3, and at least a part of the inward retracted portion 12 cannot play a role in limiting the position of the connecting member 3. However, in the present disclosure, the inward retracted portion 12 fits the connecting member 3, so that an effective action length of the inward retracted portion 12 is increased, which is conducive to shortening a radial length of the inward retracted portion 12.

In some embodiments, along the radial direction of the casing 1, a ratio of a length of the inward retracted portion 12 to a thickness of the casing 1 is a, where 2≤a≤10.

It may be understood that when the ratio of the length of the inward retracted portion 12 to the thickness of the casing 1 is less than 2, the radial length of the inward retracted portion 12 is too short, the inward retracted portion 12 is difficult to play an effective role in limiting the position of the connecting member 3, and the mounting stability of the connecting member 3 is difficult to be guaranteed. When the ratio of the length of the inward retracted portion 12 to the thickness of the casing 1 is greater than 10, the radial length of the inward retracted portion 12 is too long, which easily leads to excessive of stretching subjected to the casing 1, thereby leading to the coating layer on the surface of the casing 1 being too thin, and affecting the performance of the battery. As such, in the present disclosure, the ratio of the length of the inward retracted portion 12 to the thickness of the casing 1 is set to range from 2 to 10, so that the inward retracted portion 12 may play an effective role in limiting the position of the connecting member 3 without causing an excessively large degree of stretching subjected to the casing 1.

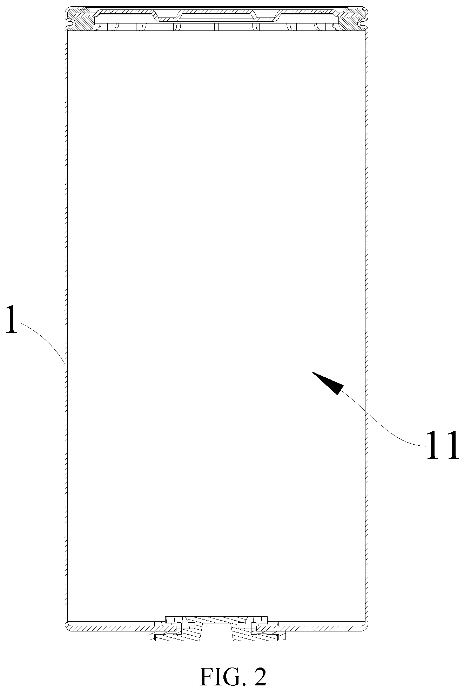

In some embodiments, as shown in FIG. 2 and FIG. 3, the battery further includes a cover plate 4. The cover plate 4 is connected to the connecting member 3. The connecting member 3 is configured to support the cover plate 4.

Along the radial direction of the casing 1, a connecting surface between the connecting member 3 and the cover plate 4 is protruded over the inward retracted portion 12.

It may be understood that a part of the connecting member 3 is disposed between the inward retracted portion 12 and the winding core 2, so that the position of the connecting member 3 may be limited to improve mounting stability of the connecting member 3. The connecting member 3 is connected to the cover plate 4, so that the connecting member 3 may support the cover plate 4. In other words, in the present disclosure, the connecting member 3 is limited between the inward retracted portion 12 and the winding core 2, and the connecting member 3 is connected to the cover plate 4, so that the connecting member 3 may support the cover plate 4. Moreover, the connecting surface between the connecting member 3 and the cover plate 4 may be protruded over the inward retracted portion 12, so that the connecting member 3 may play an effective role in limiting the position of the cover plate 4. In this way, the inward retracted portion 12 does not directly support the cover plate 4, so that the depth of the inward retracted portion 12 protruding relative to the interior of the mounting cavity 11 is shortened, the degree of stretching subjected to the casing 1 is reduced, thereby ensuring the thickness of a coating layer on the surface of the casing 1, and improving the performance of the battery.

In some embodiments, the connecting member 3 connects the cover plate 4 with the casing 1 in a sealed manner.

It may be understood that the cover plate 4 and the casing 1 are connected by the connecting member 3 in a sealed manner, thereby ensuring the sealing performance of the battery.

It may be understood that the sealing member is used as the connecting member 3, and the sealing member is reused, so that the connecting member 3 may not only support the cover plate 4 and limit the winding core 2, but also ensure the sealing performance of the battery.

In some embodiments, as shown in FIG. 2 and FIG. 3, the connecting member 3 includes a support surface 32, and a side of the cover plate 4 facing the winding core 2 is abutted against the support surface 32.

Along the side of the cover plate 4 facing the winding core 2, the support surface 32 extends toward the center of the cover plate 4.

It may be understood that the support surface 32 of the connecting member 3 is abutted against the cover plate 4, and the support surface 32 extends along the surface of the cover plate 4, so that a contact area between the connecting member 3 and the cover plate 4 may be increased. That is, the support surface 32 of the connecting member 3 on the cover plate 4 may be increased, thereby ensuring the mounting stability of the cover plate 4.

In some embodiments, as shown in FIG. 3 and FIG. 5, the connecting member 3 is formed with a first clamping groove 33, and the cover plate 4 is clamped in the first clamping groove 33.

It may be understood that the cover plate 4 is clamped to the connecting member 3 to improve the connection stability between the cover plate 4 and the connecting member 3, so that the connecting member 3 may stably support the cover plate 4.

In some embodiments, the connecting member 3 includes a first connecting portion 36 and a second connecting portion 37 connected in sequence. The cover plate 4 is sandwiched between the first connecting portion 36 and the second connecting portion 37. The second connecting portion 37 is located between the cover plate 4 and the winding core 2.

Along the radial direction of the casing 1, a length of the second connecting portion 37 is greater than or equal to a length of the first connecting portion 36.

It may be understood that the first connecting portion 36 and the second connecting portion 37 sandwich the cover plate 4 therebetween to the limit and fix the cover plate 4. Moreover, the length of the second connecting portion 37 located between the cover plate 4 and the winding core 2 is designed to be not less than the length of the first connecting portion 36, so as to ensure that the second connecting portion 37 may effectively support the cover plate 4, thereby effectively preventing the cover plate 4 from collapsing.

In some embodiments, along the radial direction of the casing 1, the length of the first connecting portion 36 is L1, and the length of the second connecting portion 37 is L2, where 1≤L2/L1≤2.

It may be understood that when a ratio of a radial length of the second connecting portion 37 to a radial length of the first connecting portion 36 is less than 1, the length of the second connecting portion 37 is insufficient to be difficult to effectively support the cover plate 4. When the battery is sealed, the cover plate 4 is easily to occur a situation of collapsing. When the ratio of the radial length of the second connecting portion 37 to the radial length of the first connecting portion 36 is greater than 2, the length of the second connecting portion 37 is too long, and the second connecting portion 37 is easy to interfere with other components of the battery, which easily causes a size of the battery to be too large. As such, in the present disclosure, the ratio of the radial length of the second connecting portion 37 to the radial length of the first connecting portion 36 is set to range from 1 to 2, so as to prevent the length of the second connecting portion 37 from being too long to interfere with other components while ensuring the supporting effect on the cover plate 4, thereby preventing the size of the battery from being too large.

In some embodiments, the casing 1 includes a body portion 13 and a crimping portion 14. The crimping portion 14 is connected to an end portion of the body portion 13 away from an inner bottom wall of the casing 1. The crimping portion 14 extends toward a center of the mounting cavity 11.

In some embodiments, at least part of the connecting member 3 is abutted against a side of the crimping portion 14 facing the winding core 2.

It may be understood that the crimping portion 14 may play a role in limiting the position of the connecting member 3 to improve the mounting stability of the connecting member 3, so that the connecting member 3 may stably play a role in limiting the position of the winding core 2, and the connecting member 3 may stably support the cover plate 4.

In some embodiments, a side of the connecting member 3 away from the winding core is provided with a protruding portion 38. The protruding portion 38 is connected to the crimping portion 14 in a sealed manner, thereby ensuring the connection and sealing performance of the connecting member 3 and the casing 1, and further ensuring the sealing performance of the battery.

For example, when the battery is sealed, the crimping portion 14 extrudes the connecting member 3, so that the side of the connecting member 3 away from the winding core is provided with the protruding portion 38, and the crimping portion 14 is connected to the protruding portion 38 in a sealed manner.

In some embodiments, as shown in FIGS. 3 and 4, a side of the connecting member 3 away from the cover plate 4 is provided with a groove 34. A reinforcing rib 35 is provided at the groove 34.

It may be understood that by the groove 34 is formed at the connecting member 3, which is conducive to reducing a weight of the connecting member 3. The reinforcing rib 35 is provided at the groove 34, so that a structural strength of the connecting member 3 may be ensured.

In some embodiments, the inward retracted portion 12 is connected to the body portion 13. A connection position between the inward retracted portion 12 and the body portion 13 is provided as a rounded corner.

In some embodiments, the inward retracted portion 12 is a rolling groove structure. A groove opening of the rolling groove and a groove bottom of the rolling groove are both transitioned with rounded corners.

The embodiments of the present disclosure further disclose an electrical device, including the above-described battery.

According to the electrical device in the embodiments of the present disclosure, a part of the connecting member 3 is disposed between the inward retracted portion 12 and the winding core 2 to limit the position of the connecting member 3, so that the mounting stability of the connecting member 3 may be improved. The connecting member 3 is abutted against the winding core 2, so that the connecting member 3 may play a role in limiting the position of the winding core 2. In other words, in the present disclosure, the connecting member 3 is limited between the inward retracted portion 12 and the winding core 2, and the connecting member 3 is abutted against the winding core 2, so that the connecting member 3 may play a role in limiting the winding core 2. Moreover, the connecting surface between the connecting member 3 and the winding core 2 may be protruded over the inward retracted portion 12, so that the connecting member 3 may play an effective role in limiting the position of the winding core 2. In this way, the inward retracted portion 12 does not directly play a role in limiting the position of the winding core 2, so that the inward retracted depth of the inward retracted portion 12 protruding relative to the interior of the mounting cavity 11 is shortened, the degree of stretching subjected to the casing 1 is reduced, thereby ensuring the thickness of the coating layer on the surface of the casing 1, improving the performance of the battery, and improving the performance of the electrical device.

It should be noted that the electrical device may be a vehicle, an aircraft, or a household appliance. It should be noted that the foregoing is merely an example of the electrical device, and does not impose a special limitation on the electrical device.

## Claims

1. A battery, comprising:
a casing formed with a mounting cavity and an inward retracted portion, wherein the inward retracted portion is protruded toward an interior of the mounting cavity;
a winding core disposed in the mounting cavity, wherein the winding core is located between the inward retracted portion and an inner bottom wall of the casing; and
a connecting member, wherein a part of the connecting member is disposed between the inward retracted portion and the winding core, and the connecting member is abutted against a side of the winding core away from the inner bottom wall of the casing;
wherein along a radial direction of the casing, a connecting surface between the connecting member and the winding core is at least partially protruded over the inward retracted portion.

2. The battery according to claim 1, wherein the connecting member extends along the side of the winding core away from the inner bottom wall of the casing.

3. The battery according to claim 1, wherein a side of the connecting member facing the inward retracted portion is formed with a second clamping groove, and the inward retracted portion is clamped in the second clamping groove.

4. The battery according to claim 3, wherein the inward retracted portion fits a groove wall of the second clamping groove.

5. The battery according to any one of claims 1 to 4, wherein along the radial direction of the casing, a ratio of a length of the inward retracted portion to a thickness of the casing is a, where 2≤a≤10.

6. The battery according to any one of claims 1 to 4, wherein the battery further comprises a cover plate, the cover plate is connected to the connecting member, and the connecting member is configured to support the cover plate; and
wherein along the radial direction of the casing, a connecting surface between the connecting member and the cover plate is protruded over the inward retracted portion.

7. The battery according to claim 6, wherein the connecting member connects the cover plate with the casing in a sealed manner.

8. The battery according to claim 6, wherein the connecting member comprises a support surface, and a side of the cover plate facing the winding core is abutted against the support surface; and
wherein along the side of the cover plate facing the winding core, the support surface extends toward a center of the cover plate.

9. The battery according to claim 6, wherein the connecting member is formed with a first clamping groove, and the cover plate is clamped in the first clamping groove.

10. The battery according to claim 6, wherein the connecting member comprises a first connecting portion and a second connecting portion connected in sequence, the cover plate is sandwiched between the first connecting portion and the second connecting portion, and the second connecting portion is located between the cover plate and the winding core; and
wherein along the radial direction of the casing, a length of the second connecting portion is greater than or equal to a length of the first connecting portion.

11. The battery according to claim 10, wherein along the radial direction of the casing, the length of the first connecting portion is L1, and the length of the second connecting portion is L2, where 1≤L2/L1≤2.

12. The battery according to any one of claims 1 to 4, wherein the casing comprises a body portion and a crimping portion, the crimping portion is connected to an end portion of the body portion away from the inner bottom wall of the casing, and the crimping portion extends toward a center of the mounting cavity;
wherein at least a part of the connecting member is abutted against a side of the crimping portion facing the winding core; and/or
wherein a side of the connecting member away from the winding core is formed with a protruding portion, and the protruding portion is connected to the crimping portion in a sealed manner.

13. The battery according to claim 6, wherein a side of the connecting member away from the cover plate is formed with a groove, and a reinforcing rib is provided at the groove.

14. An electrical device, comprising the battery according to any one of claims 1 to 13.
